# EUROPÄISCHE PATENTSCHRIFT

(11) **EP 1 532 202 B1**
(45) Veröffentlichungstag und Bekanntmachung des Hinweises auf die Patenterteilung: **31.05.2006**
(21) Anmeldenummer: 04728108.4
(22) Anmeldetag: 17.04.2004
(51) Int. Cl.: C08K 5/52, C08L 33/12

(54) **THERMOSTABILISATOR FÜR KUNSTSTOFFE**
THERMOSTABILIZER FOR PLASTICS
THERMOSTABILISATEUR POUR PLASTIQUES

(30) Priorität: 31.07.2003 DE 10335578
(43) Veröffentlichungstag der Anmeldung: 25.05.2005
(73) Patentinhaber: Röhm GmbH & Co. KG, 64293 Darmstadt (DE)
(72) Erfinder: ITTMANN, Günther, 64283 Gross-Umstadt (DE)
(86) Internationale Anmeldenummer: PCT/EP2004/004088
(87) Internationale Veröffentlichungsnummer: WO 2005/021631

(56) Entgegenhaltungen:
- PATENT ABSTRACTS OF JAPAN Bd. 0112, Nr. 97 (C-448), 25. September 1987 (1987-09-25) & JP 62 089756 A (MITSUBISHI RAYON CO LTD), 24. April 1987 (1987-04-24) in der Anmeldung erwähnt

## Beschreibung

### Gebiet der Erfindung

Die Erfindung betrifft Thermostabilisatoren Für Kunststoffe, insbesondere Thermostabilisatoren für transparente Kunststoffe, wie beispielsweise Polymethylmethacrylat (PMMA).

### Stand der Technik

Es ist bekannt, Kunststoffplatten durch Polymerisation geeigneter Monomere und/oder Monomermischungen, die auch vorpolymerisiert als Sirupe vorliegen können, in Kammern mit Wänden aus Glasplatten, z.B. Floatglas, herzustellen.

Üblicherweise bilden die Glasplatten den Boden und die Decke der Kammer, die auf der Seite durch geeignete Mittel, wie beispielsweise Kederschnüre oder Bänder aus gegenüber dem Monomeren beständigen Material abgedichtet werden.

Die Produkte werden unter dem Namen Plexiglas® GS von der Röhm GmbH & Co. KG in den Handel gebracht.

### Stand der Technik

Thermostabilisatoren sind bekannt. So werden beispielsweise OrganoZinnverbindungen oder Bleiverbindungen zur Stabilisierung von Polyvinylchlorid (PVC) eingesetzt. Die Organozinnverbindungen binden den bei der thermischen Zersetzung sich bildenden Chlorwasserstoff. Nachteilig an den Oganozinnverbindungen ist ihre Toxizität. Fernen können substituierte Harnstoffe oder Epoxyverbindungen eingesetzt werden. (Saechtling: Kunststoff Taschenbuch, 26. Ausgabe, Carl-Hanser-Verlag (1995), S. 575). Der thermische Abbau von PMMA kann durch Zusätze geringer Mengen von p-Methoxyphenyl,ethacrylamid oder Diphenylmetharylamid verringert werden. (Kunststoff-Handbuch, Bd. IX, S. 398, Carl-Hanser-Verlag, 1975).

JP 62089756 (Mitsubishi Rayon) beschreibt einen PMMA-Typ, der mit Natriumdodecylphosphat, Dinatriummonooctadecylphosphat und mit Dinatrium-mono-(3,6-dioxyoctadecyl)phosphat stabilisiert wird.

### Nachteile des Standes der Technik

Einige der als Thermostabilisatoren verwendeten Substanzen sind säurelabil und können daher nicht in Monomerrezepturen verwendet werden, die saure Monomere, wie beispielsweise (Meth)acrylsäure enthalten.

### Aufgabe und Lösung

Es bestand also die Aufgabe, einen inneren Thermostabilisator zu finden, der ohne den Lösungsvermittler Benzylalkohol und seine Nachteile auskommt und der sich auch in säurehaltigen Monomerverbindungen einsetzen lässt.

### Lösung

Es wurde gefunden, dass eine Verbindung der allgemeinen Formel I

Rₙ¹-PO₃^{⊖} (HN^{⊕}-R₃²)ₘ

wobei gilt:
n = 1 oder 2
m = 2 oder 1 und n + m = 3

Im Fall von m = 1 ist das Anion einfach negativ geladen. Im Fall von m = 2 ist das Anion zweifach negativ geladen.
R¹ = Methyl, Ethyl, Propyl, iso-Propyl, Butyl, iso-Butyl, Pentyl, Hexyl, Heptyl, Octyl, Nonyl, Decyl, Undecyl oder Dodecyl
R² = Methyl, Ethyl, Propyl, iso-Propyl oder Butyl,
eingesetzt in Mengen von 0,001 - 0,5 Gew.-% in einer polymerisierbaren Monomermischung, eine gute thermostabilisierende Wirkung zeigt.

Als polymerisierbare Monomermischung kommen Methylmethacrylat und mit MMA copolymerisierbare Monomere in Betracht.
Polymerisierbare Monomermischungen sind tert. Zusammensetzungen, die ethylenisch ungesättige Monomere und/oder vorpolymerisierte Monomere (Sirupe) aufweisen. Bevorzugt weisen diese Zusammensetzungen Monomere oder Sirupe auf, die zur Herstellung sogenannter organischer Gläser oder Kunstgläser geeignet sind.

Zu den oben erwähnten ethylenisch ungesättigen Monomeren, die in den polymerisierbaren Monomermischungen enthalten sein können, gehören u. a. Vinylester, Ester der Acrylsäure, beispielsweise Methyl- und Ethylacrylat, Ester der Methacrylsäure, beispielsweise Methylmethacrylat, Butylmethacrylat und Ethylhexylmethacrylat, Vinylchlorid, Vinylidenchlorid, Vinylacetat, Styrol, substituierte Styrole mit einem Alkylsubstituenten in der Seitenkette, wie z.B. α-Methylstyrol und α-Ethylstyrol, substituierte Styrole mit einem Alkylsubstituenten an dem Ring, wie beispielsweise Vinyltoluol und p-Methylstyrol, halogenierte Styrole, wie beispielsweise Monochlorstyrole, Dichlorstyrole, Tribromstyrole und Tetrabromstyrole, Vinyl-und Isopropenylether, Maleinsäurederivate, wie beispielsweise Maleinsäureanhydrid, Methylmaleinsäureanhydrid, Maleinimid, Methylmaleinimid, und Diene, wie beispielsweise 1,3-Butadien und Divinylbenzol, bevorzugt sind Acrylester, Methacrylsäureester, Vinylacetat, Vinylchlorid, Vinylidenchlorid, Styrol, α-Methylstyrol, halogensubstituierte Styrole, Vinylether, Isopropenylether und Diene, ganz besonders bevorzugt ist Methylmethacrylat.

Ganz besonders bevorzugte Ausführungsformen des erfindungsgemäßen Verfahrens zeichnen sich dadurch aus, dass man als polymerisierbare Masse ein (Meth)acrylat-haltiges Harz mit der Zusammensetzung

| | |
|---|---|
| (Meth)acrylat (A) | 20 - 99,9 Gew.-%, |
| Comonomere (B) | 0,0 - 79,9 Gew.-%, |
| in (A) oder (B) lösliche Polymere (C) | 0 - 70,0 Gew.-% |

und bezogen auf 100 Teile der oben genannten Komponenten:

| | |
|---|---|
| Initiatoren | 0,01 - 5 Gew.-Teile |
| sowie weitere übliche Verarbeitungshilfsmittel | 0-10 Gew.-Teile |

einsetzt.

(Meth)acrylat bezeichnet Acryl- und/ Methacrylverbindungen, wie diese beispielsweise zuvor genannt wurden.

Comonomere sind Verbindungen, die mit (Meth)acrylaten copolymerisierbar sind. Hierzu gehören unter anderem die oben genannten Monomere, die kein (Meth)acrylat sind. Polymere, die gelöst in der polymerisierbaren Masse enthalten sein können, sind beispielsweise Polymerisate oder Mischpolymerisate der o.g. monomeren Bestandteile. Initiatoren und Verarbeitungshilfsmittel werden nachfolgend beschrieben.

Die oben genannten Monomere können auch als Mischungen sowie in vorpolymerisierter Form, als sogenannte Sirupe, eingesetzt werden.

Alle oben genannten Monomere sind kommerziell erhältlich. Sie können aber auch auf jede dem Fachmann bekannte Art hergestellt werden.

Die polymerisierbaren Massen können die üblichen Zusätze enthalten.

Beispielhaft seien folgende Zusatzstoffe genannt: Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Die Zusatzstoffe werden in üblicher Menge, d. h., bis zu 80 Gew.-%, vorzugsweise bis zu 30 Gew.-%, bezogen auf die Gesamtmasse, eingesetzt. Ist die Menge größer als 80 Gew.-%, bezogen auf die Gesamtmasse, so können Eigenschaften der polymerisierbaren Masse, wie beispielsweise die Verarbeitbarkeit, gestört werden.

Erfindungsgemäß wird die polymerisierbare Masse in eine Form gegossen, die zumindest teilweise eine Innenoberfläche aus anorganischem Glas aufweist.

Unter Form sind alle Formen zu verstehen, die üblicherweise verwendet werden. Diese Form kann aus verschiedenen Teilen zusammengesetzt sein, wobei ein Teil der Form eine Glasoberfläche aufweist. Der Begriff "zumindest teilweise" sagt aus, dass der Anteil der Glasoberfläche, bezogen auf die gesamte innere Oberfläche der Form zumindest 10%, vorzugsweise mehr als 30% und ganz besonders bevorzugt mehr als 80% beträgt.

Eine bevorzugte Form umfasst beispielsweise zwei Glasplatten, eine Deckenplatte und eine Bodenplatte, die an den Seiten mit geeigneten Maßnahmen abgedichtet und getrennt werden, wie z. B. Bändern oder Kederschnüren. Die Glasplatten können beispielsweise mit Metallklammern zusammen gehalten werden und weisen beispielsweise eine Fläche von 2 m *3 m und eine Dicke von ca. 2 bis 20, vorzugsweise 3 bis 12 mm auf. Des weiteren sind auch sogenannte Mehrfachkammern, insbesondere Doppelkammern, bekannt, die einen schichtweisen Aufbau haben, wobei die mittleren Glasplatten auf beiden Seiten mit der polymerisierbaren Masse Kontakt haben.

Anorganische Gläser für die Formmaterialien umfassen insbesondere abgekühlte Schmelzen, die beispielsweise Siliciumdioxid (SiO₂), Calciumoxid (CaO), Natriumoxid (Na₂O) mit z.T. größeren Mengen von Bortrioxid (B₂O₃), Aluminiumoxid (Al₂O₃), Bleioxid (PbO), Magnesiumoxid (MgO), Bariumoxid (BaO), Kaliumoxid (K₂O) u.a. Zusätze enthalten können.

Nach dem Füllen der Form wird die polymerisierbare Masse unter Erhalt eines Formkörpers polymerisiert. Unter Polymerisation sind hierbei alle in der Fachwelt bekannten Verfahren zu verstehen, die in Masse erfolgen, wie etwa die Substanzpolymerisation, welche beispielhaft in Houben-Weyl, Band E20, Teil 2 (1987), S. 1145ff. beschrieben ist.

Die Polymerisation kann radikalisch sowie ionisch erfolgen, wobei die radikalische Polymerisation bevorzugt ist. Sie kann thermisch, durch Strahlen und durch Initiatoren erfolgen, wobei vorzugsweise Initiatoren verwendet werden, die Radikale bilden. Die jeweiligen Bedingungen der Polymerisation hängen von den gewählten Monomeren und dem Initiatorsystem ab und sind in der Fachwelt weithin bekannt.

Zu den bevorzugten Initiatoren gehören unter anderem die in der Fachwelt weithin bekannten Azoinitiatoren, wie AIBN bzw. 1,1-Azobiscyclohexancarbonitril, sowie Peroxyverbindungen, wie Methylethylketonperoxid, Acetylacetonperoxid, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert-Butylperoxy-3,5,5-trimethylhexanoat, 1,1-Bis(tert.-butylperoxy)cyclohexan, 1,1-Bis (tert.-butylperoxy)3,3,5-trimethylcyclohexan, Cumylhydroperoxid, tert.-Butylhydroperoxid, Dicumylperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Nach Erhalt des Formkörpers wird dieser entformt, d.h. er wird aus der Form genommen. Dieser Vorgang ist von der verwendeten Form abhängig und an sich in der Fachwelt bekannt.
Es wurde nun gefunden, dass das Umsetzungsprodukt beispielsweise aus einem Gemisch aus Mono-(30-35 Gew.-%) und Di-(65-70 Gew.-%) nonylphosphat mit Triethylamin, eingesetzt als reines Produkt, eine thermostabilisierende Wirkung auf den Kunststoffformkörper zeigt. Darüber hinaus ist das erfindungsgemäße Produkt säurestabil, diese Eigenschaft erlaubt seine Verwendung in Rezepturen, die saure Komponenten, wie z. B. Methacrylsäure, Acrylsäure oder Stearinsäure enthalten. Die HALS-Produkte (hindered amine light stabilizers), wie beispielsweise Tinnvin 770 (Ciba) sind säurelabil. Der Ansatz wird trübe.

### Verwendung der erfindungsgemäßen Verbindung als Thermostabilisator

Die erfindungsgemäße Verbindung eignet sich als Thermostabilisator von Polymeren, insbesondere von PMMA.

Als weitere, mit der erfindungsgemäßen Verbindung thermostabilisierbare Polymere, seien genannt: Polycarbonat (PC), PET, PE, Polystyrol (PS) usw. Sie wird dabei in Mengen von 0,0001 - 5 Gew.-%, bezogen auf das Polymer, bevorzugt in Mengen von 0,00055 - 5 Gew.-%, bezogen auf das Polymer und ganz besonders bevorzugt in Mengen von 0,001 - 5 Gew.-%, bezogen auf das Polymer eingesetzt.

### Beispiele

### 1. Herstellung des erfindungsgemäßen Produkts

1.600 g des Gemisches aus Mono-(30-35 Gew.-%) und Di-(65-70 Gew.-%) nonylphosphat (Zelec® UN, Hersteller: DU PONT) werden in einem Reaktionskolben vorgelegt und 492,3 g Triethylamin wird unter Rühren zugetropft. Bei dieser exothermen Reaktion wird eine Temperatur von >50° C erreicht. Nach dem Zutropfen wird noch 30 Min. weitergerührt. Man erhält ein klares, leicht gelbstichiges Reaktionsprodukt.

### 2. Herstellung eines Methylmethacrylat (MMA)-PMMA-Sirups

MMA wird mit 0,07 Gew.-% Bis(4-tert.-Butylcyclohexyl)peroxydicarbonat versetzt und unter Rühren gelöst. 50 % der Lösung werden unter Rühren auf ca. 90° C erwärmt. Die anderen 50 % der Lösung werden zu der erwärmten Lösung in der Art zulaufen gelassen, dass eine Temperatur von 93° C nicht überschritten wird. Danach werden noch ca. 2-3 Min. nachreagieren lassen und danach der MMA-PMMA-Sirup auf Raumtemperatur schnell abgekühlt. Der Polymeranteil des Sirups beträgt ca. 20 % und dieser hat ein Molekulargewicht von ca. 170.000.

### 2. Einfluß des erfindungsgemäßen Produkts auf das Temperverhalten (30 Min. bei 200°) des damit hergestellten Acrylglases: (Visuelle Beurteilung).

- Beispiel 1:: Visuell keine Veränderung erkennbar
- Beispiel 2:: Sehr unruhige Oberflächen - auf beiden Seiten sehr große oberflächliche Blasenbildung.

### Beispiele für die Verwendung des erfindungsgemäßen Produkts als Thermostabilisator

### Beispiel 1

Mit 2 Silikatglasscheiben der Abmessung 40 x 50 cm und einer 3,6 mm dicken PVC-Rundschnur wird eine Kammer gebaut, die mit Metallklammern zusammengehalten wird. In den Innenraum dieser Kammer wird folgender Polymerisationsansatz gefüllt:

| | | |
|---|---|---|
| 0,05 Gew.-% | erfindungsgemäße Verbindung der Formel I, wobei | |
| | gilt: | n = 2 |
| | | m = 1 |
| | | R¹ = Methyl |
| | | R² = Ethyl |
| 0,08 Gew.-% | 2,2-Azobis-(isobutyronitril) | |
| 99,87 Gew.-% | MMA-PMMA-Sirup | |

Die Zusätze werden unter Rühren im MMA-PMMA-Sirup gelöst. Nachdem die Kammer verschlossen ist, wird die Polymerisation in einem Wasserbecken 17 h bei 45° C durchgeführt. Danach werden die Metallklammern und die Rundschnur entfernt und die Kammern 3 h bei 115° im Temperschrank auspolymerisiert. Nach dem Abkühlen auf Raumtemperatur wurden die Glasscheiben entfernt und die Entformung der Acrylglasscheibe von den Glasscheiben beurteilt.

### Beispiel 2:

Es wurde verfahren wie in Beispiel 1 mit Zusatz von 0,10 % der erfindungsgemäßen Verbindung.

Mit 2 Silikatglasscheiben der Abmessung 40 x 50 cm und einer 3,6 mm dicken PVC-Rundschnur wird eine Kammer gebaut, die mit Metallklammern zusammengehalten wird. In den Innenraum dieser Kammer wird folgender Polymerisationsansatz gefüllt:

| | | |
|---|---|---|
| 0,05 Gew.-% | erfindungsgemäße Verbindung der Formel I, wobei | |
| | gilt: | n = 2 |
| | | m = 1 |
| | | R¹ = Methyl |
| | | R² = Ethyl |
| 0,08 Gew.-% | 2,2-Azobis-(isobutyronitril) | |
| 99,87 Gew.-% | MMA-PMMA-Sirup | |

Die Zusätze werden unter Rühren im MMA-PMMA-Sirup gelöst. Nachdem die Kammer verschlossen ist, wird die Polymerisation in einem Wasserbecken 17 h bei 45° C durchgeführt. Danach werden die Metallklammern und die Rundschnur entfernt und die Kammern 3 h bei 115° im Temperschrank auspolymerisiert. Nach dem Abkühlen auf Raumtemperatur wurden die Glasscheiben entfernt.

### Beispiel 3:

Es wurde verfahren wie in Beispiel 1 ohne Zusatz der erfindungsgemäßen Verbindung.

### Ergebnis:

Einfluß des erfindungsgemäßen Produkts auf das Temperverhalten (30 Min. bei 200° C) des damit hergestellten Acrylglases: (Visuelle Beurteilung).

Messung der Thermostabilität (Gewichtsverlust) nach DIN ISO 11358:

| Beispiel | Td (2 % Gewichtsverlust) in ° C |
|---|---|
| 1 | 281 |
| 2 | 280 |
| 3 | 209 |

Die Beispiele zeigen eine deutliche Erhöhung der Temperatur, bei der ein 2%-iger Gewichtsverlust der Probe eingetreten ist.

## Patentansprüche

1. Verwendung der Verbindung
Rₙ¹PO₃^{⊖}(HN^{⊕} -R₃²⁾ₘ (I)
als Thermostabilisator bei der Gusspolymerisation von Methylmethacrylat-Mischungen, wobei gilt:
R¹ =Methyl, Ethyl, Propyl, iso-Propyl, Butyl, iso-Butyl, Pentyl, Hexyl, Heptyl, Octyl, Nonyl, Decyl, Undecyl, Dodecyl
R² = Methyl, Ethyl, Propyl, iso-Propyl, Butyl
n=1 oder 2
m = 2 oder 1

2. Verwendung der Verbindung der Formel I in Mengen von 0,001 - 5,0 Gew.-%, bezogen auf das Gewicht der polymerisierbaren Monomeren oder der Monomermischung, als Thermostabilisator.

3. Kunststoffformkörper, hergestellt unter Verwendung einer Verbindung der Formel I.

## Claims

1. Use of the compound
Rₙ¹PO₃^{⊖}(HN^{⊕}-R₃²⁾ₘ (I)
as heat stabilizer during the cast polymerization of methyl methacrylate mixtures, where:
R¹ = methyl, ethyl, propyl, isopropyl, butyl, isobutyl, pentyl, hexyl, heptyl, octyl, nonyl, decyl, undecyl, dodecyl
R² = methyl, ethyl, propyl, isopropyl, butyl
n = 1 or 2
m = 2 or 1

2. Use of the compound of the formula I in amounts of from 0.001 to 5.0% by weight, based on the weight of the polymerizable monomers or of the monomer mixture, as heat stabilizer.

3. Plastics moulding produced using a compound of the formula I.

## Revendications

1. Utilisation du composé
Rₙ¹PO₃^{⊖}(HN^{⊕}-R₃²)ₘ (I)
comme stabilisateur thermique lors de la polymérisation par moulage de mélanges de méthacrylate de méthyle, où
R¹ = méthyle, éthyle, propyle, iso-propyle, butyle, isobutyle, pentyle, hexyle, heptyle, octyle, nonyle, décyle, undécyle, dodécyle
R² = méthyle, éthyle, propyle, iso-propyle, butyle,
n = 1 ou 2
m = 2 ou 1.

2. Utilisation du composé de formule I en des quantités de 0,001 à 5,0% en poids par rapport au poids des monomères polymérisables ou du mélange de monomères, comme stabilisateur thermique.

3. Corps façonné en matériau synthétique réalisé avec utilisation d'un composé de formule I.
